# EUROPEAN PATENT APPLICATION

(11) **EP 0 690 316 A1**
(43) Date of publication of application: **03.01.1996**
(21) Application number: 95110304.3
(22) Date of filing: 30.06.1995
(51) Int. Cl.: G01S 13/89, G01S 13/86, G01S 7/04

(54) **Low visibility imaging radar system**

(30) Priority: 30.06.1994 US 269425
(71) Applicant: Hughes Aircraft Company, Los Angeles, California 90045-0066 (US)
(72) Inventor: Hui, Leo H., Los Angeles, California 90045 (US)
(74) Representative: KUHNEN, WACKER & PARTNER

(57) **Abstract**

An imaging radar system (10) comprising a forward-looking millimeter-wave radar system (10) for use in low visibility environments. The imaging radar system (10) comprises an antenna (11), a transceiver (12), a processor (13), and a display system (20). The transceiver (12) comprises a transmitter (14), a frequency reference unit (14a), and an RF receiver (15). The processor (13) comprises an IF receiver (16), an analog-to-digital converter (16a), a signal processor (17), a timing generator (18), input/output circuitry (18a) for interfacing with external systems (23, 24, 25), and a data processor (19). The display system (20) comprises a head-up or head-down display (21) and control circuitry (22). Several external systems (23, 24, 25) are coupled by way of the input/output circuitry (18a) to the data processor (19), including aircraft avionics, inertial reference, and data acquisition systems. Radar returns are amplified and downconverted to a lower intermediate frequency by the RF receiver (15) and downconverted to video frequencies in the IF receiver (16). The returns are sampled and digitized by the analog-to-digital converter (16a) and processed by the signal processor (17) using digital techniques to improve the range and azimuth resolution of the signal and provide corrections for geometry-dependent gain effects. The signal processor (17) transforms the data from range versus azimuth coordinates into azimuth versus elevation coordinates and sends the data to the display system (20) for display. The data processor (19) processes avionics data, inertial reference data, and system control signals from the external systems (23, 24, 25), and determines configuration and timing data for the system, and processing parameters for the signal processor (17).The data acquisition system (25) interacts with the signal and data processors (17, 19) to provide controls for testing and to receive data for storage. The present radar system (10) may be used for landing, takeoff, and taxi applications in low visibility environments.

## Description

### BACKGROUND

The present invention relates generally to radar systems, and more particularly, to an imaging radar system comprising a forward-looking millimeter-wave radar system for use in low visibility environments.

Aircraft or coastal operations can be adversely affected by low visibility weather. When fog conditions occur, commercial airlines are limited to certain operating minimums for landing and takeoff. Similarly, military combat flight operations can be disrupted due to problems resulting from low visibility conditions. In coastal areas, inability to see the land or other watercraft can stop harbor traffic or lead to dangerous collisions. Millimeter wave radar systems are feasible solutions to provide the ability to image airport or coastal environments in fog. Providing a pilot with a system to "see" through the fog may provide for aircraft operation using lower landing and takeoff minimums, which may result in significant financial, competitive and logistic advantages. Providing a ship navigator with such a system may minimize harbor traffic congestion and collisions.

A paper by Walter F. Horne et al. entitled "Synthetic Vision System Technology Demonstration Methodology and Results to Date", presented at Aerotech '92, Anaheim, California, October 5-8, 1992, and published by the Engineering Society For Advancing Mobility Land Sea Air and Space International describes one millimeter-wave radar system that is adapted for use in low visibility situations. However, conventional techniques either do not provide adequate detection coverage, or modify the data, which is generally unacceptable.

Accordingly, it is an objective of the present invention to provide for an improved radar system. It is a further objective of the present invention to provide for a forward-looking millimeter-wave radar system for use in low visibility environments.

### SUMMARY OF THE INVENTION

The present invention is an imaging radar system that provides an enhanced vision sensor that comprises an antenna, a transceiver, a processor, and a display system. The transceiver comprises a transmitter, a frequency reference unit, and an RF receiver. The processor comprises an IF receiver, an analog-to-digital converter, a signal processor, a timing generator, input/output circuitry for interfacing with external systems and a data processor. The display system comprises a head-up or head-down display, and control circuitry.

Several external systems are typically coupled to the imaging radar system that include an aircraft avionics system, an inertial reference system, and a data acquisition system. The external systems are coupled by way of the input/output circuitry to the data processor. The data processor receives avionics data, inertial reference data, and system control signals from the external systems, and determines the configuration and timing for the imaging radar system, and the processing parameters for the signal processor. The data acquisition system interacts with the signal and data processors to provide controls for testing and to receive data for storage.

The imaging radar system transmits a radio frequency (RF) pulse derived from the frequency reference unit and that is amplified by the transmitter and sent out through the antenna. The transmitted pulse reflects from the ground and the reflected return is received by the antenna and sent to the RF receiver where it is amplified and downconverted to a lower intermediate frequency and then downconverted to video frequencies in the IF receiver. The signal is sampled and digitized by the analog-to-digital converter and processed by the signal processor using digital techniques to improve the range and azimuth resolution of the signal and provide corrections for geometry-dependent gain effects. The signal processor transforms the data from range versus azimuth coordinates into azimuth versus elevation coordinates and sends the data to the display system for display. The data processor processes avionics data, inertial reference data, and system control signals from the external systems, and determines configuration and timing data for the system, and processing parameters for the signal processor.

The imaging radar system may be used for landing, takeoff, and taxi applications in low visibility environments. The imaging radar system is a forward-looking, millimeter-wave imaging radar system that generates a conformal real time image, such as of a runway and airport, for example, that is displayed on a monitor such as a head-up or head-down display.

Some of the advantages of the imaging radar system are it's ability to provide: high image resolution in a forward-looking direction; relatively quick (>10 frames per second) image update rate; real time image display (low latency); conformal images of the real world; and imagery to a distance of approximately 2 nm while in low visibility conditions, especially fog. The imaging radar system also generates minimal RF interference in airports, is suitable for use in head-up displays, and is a relatively low cost system geared for commercial production.

### BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which, the sole figure of the drawing illustrates an imaging radar system in accordance with the principles of the present invention.

### DETAILED DESCRIPTION

Referring to the drawing figure, it illustrates an exemplary imaging radar system 10 in accordance with the principles of the present invention. The imaging radar system 10 is comprised of an antenna 11 which is coupled to a transceiver 12. The transceiver 12 is comprised of a transmitter 14, a frequency reference unit 14a, and a RF receiver 15. The transceiver 12 is coupled to a processor 13 that is comprised of an IF receiver 16, analog-to-digital (A/D) converter 16a, a signal processor 17 coupled to the analog-to-digital converter 16a, a timing generator 18, input/output (I/O) circuitry 18a, and a data processor 19 coupled to the timing generator 18. The RF receiver 15 is coupled to the IF receiver 16, and the timing generator 18 is coupled to the transmitter 14.

The imaging radar system 10 is coupled to a display system 20 that comprises a display system 20 and control circuitry 22. The display 21 may be a stroke and raster head-up display 21, such as one manufactured by Flight Dynamics, for example, or a head-down display 21a, for example. The display 21, 21a is coupled to the signal processor 17 while the control circuitry 22 is coupled to the data processor 19. In the exemplary imaging radar system 10 shown in the drawing figure, the input/output circuitry 18a is coupled to several external systems including, aircraft avionics systems 23, an inertial reference system 24 and a data acquisition system 25, for example. The inertial reference system 24 may be a Hemispherical Resonator Gyro, manufactured by Delco Electronics Corporation, for example.

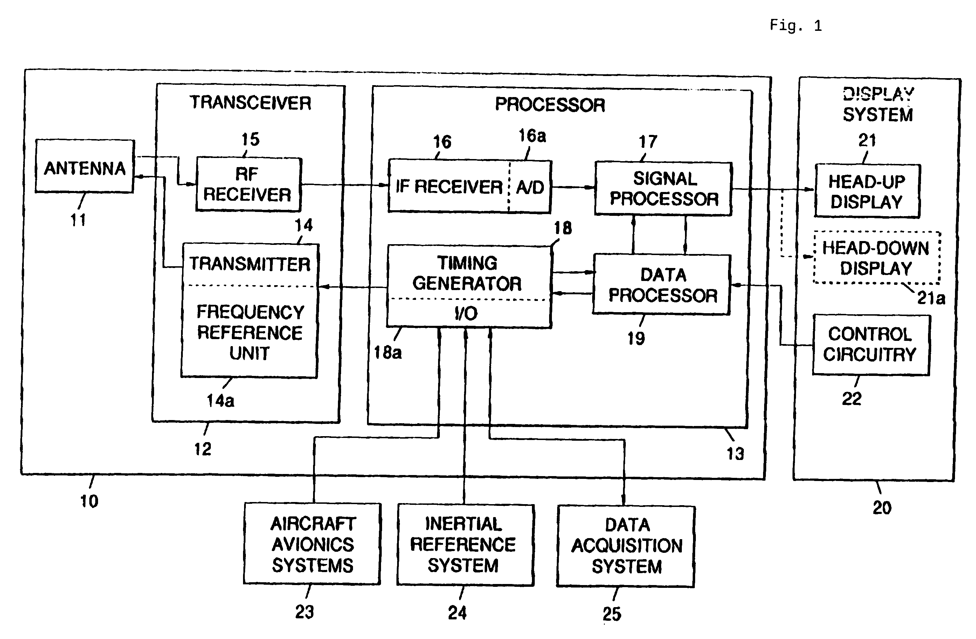

The imaging radar system 10 shown in Fig. 1 comprises a Ka band aircraft radar that provides sensor imagery on the stroke and raster head-up display 21. The radar imagery is displayed in raster RS-170 format, while flight symbology is displayed in stroke format in a conventional manner. In low visibility conditions, the radar imagery is used to enhance a pilot's situation awareness, while the flight symbology is used to provide lateral and vertical navigation cues. The radar system 10 is capable of imaging in low visibility conditions out to a distance of approximately 2 nm, allowing the pilot to have a synthetic view of a runway area, for example, that overlays a real runway when it is visible. The runway is made clear on the display system 20 to allow runway markings and lights to show when they are visible. The radar system 10 provides high resolution, conformal to the real world, forward-looking imagery at greater than a 10 frames per second update rate with low display latency. A field of view of 30 degrees in azimuth and 22.5 degrees in elevation is displayed on the head-up display 21. The image provides adequate contrast for clear definition of runway edges and obstacles in the vicinity of the airport.

The radar system 10 comprises three subsystems including the processor 13, the transceiver 12, and the antenna 11. The signal processor 17 in the processor 13 provides for high throughput and uses digital signal processing techniques to improve the azimuth and elevation resolution of the radar image prior to transforming the radar data, which is initially in range versus azimuth coordinates, into an azimuth versus elevation image which is in the proper perspective to be conformal with the real world.

The azimuth resolution improvement is achieved by use of a monopulse thresholding technique, which is disclosed in U.S. Patent Application Serial No. 08/269 331 , filed June 30 , 1994 , entitled "Monopulse Thresholding", assigned to the assignee of the present invention. The monopulse thresholding technique provides up to a 2:1 azimuth resolution improvement over that of the initial resolution provided by the antenna azimuth beamwidth.

The elevation resolution improvement is achieved by a range cell formation technique, which is disclosed in U.S. Patent Application Serial No. unknown , filed June 7, 1995, entitled "Range Cell Formation Process", assigned to the assignee of the present invention. This technique provides a method to ensure that targets at the farther portion of the image do not get lost in the conversion from the range dimension to the elevation dimension because there is a range compression effect that occurs in this region of the image. Additionally, this technique is used to refine the elevation position of close-in targets because there is an elevation spreading achieved by a high precision and yet versatile approximation to the conventional transformation of each data cell coordinate into display coordinates, which accounts for all sensor to real-world geometries and motions.

The transformation technique is disclosed in U.S. Patent Application Serial No. 08/269,407, filed June 30, 1994, entitled "Precision High Speed Perspective Transformation from Range-Azimuth Format to Elevation-Azimuth Format", assigned to the assignee of the present invention. Use of the teachings of this invention provides an image that is conformal to the real world at a speed that is up to 6.6 times faster than by using the conventional calculations.

The data processor 19 in the processor 13 provides for processing of aircraft avionics data and overall system control. The transmitter 14 in the transceiver 12 is a solid state coherent transmitter while the receiver 15 is a low noise receiver. Pulse-to-pulse frequency agility is employed. This is achieved by using three digital frequency synthesizers, alternating the reference frequency on a pulse-to-pulse basis. Barker code pulse compression techniques are also used to enhance the signal strength while maintaining high resolution. The Barker codes that are used are the codes for 3, 7, and 13 to 1.

A pulse compression sidelobe reduction process is also employed. The pulse compression sidelobe reduction process is disclosed in a paper entitled "Range Sidelobe Suppression for Barker Codes", by R. M. Golden, IEEE Transactions on Aerospace and Electronic Systems, Vol. AES-7, No. 6, November 1971. This technique provides a sidelobe reduction of at least 15 dB.

The antenna 11 provides fast electronic scanning with high accuracy, low sidelobes, and high gain. The antenna 11 may be similar to one that is described in U.S. Patent No. 5,349,363, issued Sept. 29, 1994, entitled "Continuous Transverse Stub Element Devices and Methods of Making Same", assigned to the assignee of the present invention. The radar image is displayable on both the head-up display 21 or head-down display 21a.

The imaging radar system 10 shown in the drawing figure has been built and tested using a simulated real-world runway. The radar image is displayed on the raster head-up display 21 to demonstrate image conformance to the real world. The radar system 10 was mounted on a three-degree rotational platform in order to demonstrate the radar's ability to provide for motion compensation. The inertial reference unit 24 is used to provide motion data to the radar system 10. The high speed data acquisition system 25 is coupled to the radar system 10 to record raw high speed radar data and radar imagery.

The imaging radar system 10 operates by transmitting a radio frequency (RF) pulse that originates from the frequency reference unit 14a and is amplified by the transmitter 15 and sent out through the antenna 11. The transmitted pulse reflects from the ground and the reflected return is received by the antenna 11 and sent to the RF receive 15 where it is amplified and downconverted to a lower intermediate frequency (IF) and then further to video frequencies in the IF receiver 16 in a conventional manner. The signal is sampled and digitized by the analog-to-digital converter 16a and sent to the signal processor 17.

The signal processor 17 uses the above-described digital signal processing techniques to improve the range and azimuth resolution of the signal and provide corrections for geometry-dependent gain effects. More particularly, in the signal processor 17, the signal is first pulse-compressed using the Barker code compression technique. The signal magnitude is then computed and processed using the sidelobe suppression technique applicable for Barker codes. The signal is corrected for any geometry-dependent gain effects and then processed for azimuth resolution improvement using the monopulse thresholding technique The signal is then converted into display grey shades.

The signal processor 17 then computes transformation coordinates for each signal using the high speed perspective transformation technique and takes the grey shade data from each memory with range versus azimuth coordinates and places it into memory with azimuth versus elevation coordinates. Processing to improve elevation resolution is then performed using the range cell formation processing technique. Lastly, the data is sent to the display system 20 for display.

The data processor 19 is the "brains" of the system 10. The data processor 19 receives avionics data, inertial reference data, and system control signals from the aircraft avionics systems 23, inertial reference system 24, and data acquisition system 25, and determines the configuration and timing data required for the system 10, and the processing parameters for the signal processor 17. The data acquisition system 25 interacts with the signal and data processors 17, 19 to provide controls for testing and receive data for storage.

Thus there has been described a new and improved imaging radar system for providing imagery in low visibility environments. It is to be understood that the above-described embodiment is merely illustrative of some of the may specific embodiments which represent applications of the principles of the present invention. Clearly, numerous and other arrangements can be readily devised by those skilled in the art without departing from the scope of the invention.

## Claims

1. Apparatus for providing imagery in low visibility environments that is characterized by:
a radar system (10) characterized by:
an antenna (11);
a transceiver (12) coupled to the antenna that is characterized by:
a transmitter (14);
a frequency reference unit (14a); and
an RF receiver (15);
a processor (13) coupled to the transceiver (12) that is characterized by:
an IF receiver (16) coupled to the RF receiver (15);
an analog-to-digital converter (16a);
a signal processor (17) coupled to the analog-to-digital converter (16a);
a timing generator (18) coupled to the transmitter (14);
input/output circuitry (18a) for interfacing with external systems; and
a data processor (19) coupled to the timing generator;
a display system (20) coupled to the radar system that is characterized by:
a display (21) coupled to the signal processor (17); and
control circuitry (22) coupled to the data processor (19).

2. The system (10) of Claim 1 wherein the display system (20) is characterized by a head-up display (21).

3. The system (10) of Claim 2 wherein the head-up display (21) is characterized by a stroke and raster head-up display.

4. The system (10) of Claim 2 wherein the display system (20) is characterized by a head-down display (21a).

5. The system (10) of Claim 1 wherein the external systems are characterized by:
an aircraft avionics system (23) coupled by way of the input/output circuitry (18a) to the data processor (19);
an inertial reference system (24) coupled by way of the input/output circuitry (18a) to the data processor (19); and
a data acquisition system (25) coupled by way of the input/output circuitry (18a) to the data processor (19).

6. Apparatus for providing imagery in low visibility environments that is characterized by:
a radar system (10) characterized by:
an antenna (11);
a transceiver (12) coupled to the antenna that is characterized by:
a transmitter (14);
a frequency reference unit (14a); and
an RF receiver (15);
a processor (13) coupled to the transceiver (12) that is characterized by:
an IF receiver (16) coupled to the RF receiver (15); and
an analog-to-digital converter (16a);
a signal processor (17) coupled to the analog-to-digital converter (16a);
a timing generator (18) coupled to the transmitter (14);
input/output circuitry (18a) for interfacing with external systems; and
a data processor (19) coupled to the timing generator
a display system (20) coupled to the radar system that is characterized by:
a display (21) coupled to the signal processor (17); and
control circuitry (22) coupled to the data processor (19);
an aircraft avionics system (23) coupled by way of the input/output circuitry (18a) to the data processor (19);
an inertial reference system (24) coupled by way of the input/output circuitry (18a) to the data processor (19); and
a data acquisition system (25) coupled by way of the input/output circuitry (18a) to the data processor (19).

7. The system (10) of Claim 6 wherein the display system (20) is characterized by a head-up display (21).

8. The system (10) of Claim 7 wherein the head-up display (21) is characterized by a stroke and raster head-up display.

9. The system (10) of Claim 7 wherein the display system (20) is characterized by a head-own display (21a).
